# EUROPÄISCHE PATENTANMELDUNG

(11) **EP 0 964 568 A2**
(43) Veröffentlichungstag der Anmeldung: **15.12.1999**
(21) Anmeldenummer: 99440138.8
(22) Anmeldetag: 10.06.1999
(51) Int. Cl.: H04M 11/04, H04Q 11/04

(54) **Überwachungseinrichtung und Endstelle eines Telekommunikationsnetzes**

(30) Priorität: 12.06.1998 DE 19826087
(71) Anmelder: ALCATEL, 75008 Paris (FR)
(72) Erfinder: Peters, Wolfgang, Dr., 71732 Tamm (DE); Schneider, Gerhard, 71229 Leonberg (DE); Norz, Wolfgang, 71706 Markgröningen (DE)
(74) Vertreter: Menzietti, Domenico, Dipl.-Ing

(57) **Zusammenfassung**

Es ist Aufgabe der Erfindung, eine Einrichtung oder ein Verfahren zu schaffen, das die Effektivität einer Überwachung erhöht. Das erfindungsgemäße Verfahren ist gekennzeichnet durch folgende Schritte:
1. Empfang der Bildinformation über eine Wählverbindung eines Telekommunikationsnetzes (ISDN),
2. Detektion der Rufnummer der die Bildinformation ausgesandten Endstelle,
3. Ermittlung einer der detektierten Rufnummer zugeordneten Rufnummer,
4. Aufbau einer Wählverbindung zu der ermittelten Rufnummer,
5. Weiterleiten der Bildinformation oder eines Textes oder eines Tonsignals über die Wählverbindung.

Die erfindungsgemäße Einrichtung (S-BOX) ist insbesondere dadurch gekennzeichnet, daß die automatische Wähleinrichtung (AUTO) geeignet ist, zu bestimmten Zeitpunkten eine aktuelle Bildinformation, einen Text oder ein Tonsignal über eine Wählverbindung zur einer zweiten oder dritten Endstelle (SERVER) für den Fall zu übertragen, daß die Auswerteeinrichtung (AUS) der Einrichtung (S-BOX) eine Übereinstimmung zwischen der aktuellen und einer weiteren Bildinformation feststellt. Zu bestimmten Zeitpunkten werden somit Informationen über den aktuellen Status der Überwachung bereitgestellt, unabhängig davon, ob ein Alarm aufgetreten ist oder nicht. Die überwachende Stelle (SERVER) hat damit die Möglichkeit festzustellen, ob sich die erfindungsgemäße Einrichtung (S-BOX) im betriebsfähigen Zustand befindet. Meldet sich die Einrichtung (S-BOX) nach einer vorgegebenen maximalen Zeitspanne nicht bei der überwachenden Stelle (SERVER), kann diese davon ausgehen, daß ein Alarm aufgetreten ist. Die Einrichtung (S-BOX) ist ein kompaktes Gerät mit einer leichten Bedienbarkeit. Sie beinhaltet alle zur Überwachung und zur Durchführung eines Überwachungsdienstes erforderlichen Komponenten.

## Beschreibung

Die Erfindung bezieht sich auf eine Einrichtung einer Endstelle eines Telekommunikationsnetzes gemäß dem Oberbegriff des Patentanspruchs 1, eine Endstelle nach dem Oberbegriff des Patentanspruchs 13, eine Endstelle nach dem Oberbegriff des Patentanspruchs 15, ein Verfahren nach dem Oberbegriff des Patentanspruchs 21 und ein Verfahren nach dem Oberbegriff des Patentanspruchs 22.

Aus DE 38 27 928 C2 ist ein Bildfernsprechgerät einer Endstelle eines Telekommunikationsnetzes bekannt, das eine automatische Wähleinrichtung und eine Überwachungschaltung mit Bildspeicher und Vergleichsschaltung beinhaltet. Die Überwachungsschaltung ist geeignet, zwei aufeinanderfolgende Bilder einer Videokamera miteinander zu vergleichen und eine Abweichung zwischen den beiden Bildern festzustellen. Wenn sich zwei aufeinanderfolgende Bilder um ein vogegebenes Maß voneinander unterscheiden, so baut die automatische Wähleinrichtung eine Wählverbindung zu einer vorgegebenen Rufnummer einer überwachenden Stelle auf und übermittelt das den Alarm auslösende Bild zusammen mit einer gespeicherten Nachricht. Die Überwachungsfunktion des Bildfernsprechgerätes kann dadurch überlistet werden, daß ein Einbrecher die Verbindung zwischen Bildfernsprechgerät und Telekommunikationsnetz unterbricht, was zur Folge hat, daß die automatische Wähleinrichtung keine Wählverbindung zur überwachenden Stelle aufbauen kann und somit die überwachende Stelle nicht über den Alarm informiert wird und folglich auch keine Maßnahmen zur Ergreifung des Einbrechers einleiten kann.

Es ist daher eine Aufgabe der Erfindung, eine Einrichtung oder ein Verfahren zu schaffen, das die Effektivität einer Überwachung erhöht und die Nachteile des Standes der Technik vermeidet.

Gelöst wird diese Aufgabe durch eine Einrichtung gemäß Patentanspruch 1, 13 oder 15 oder ein Verfahren nach Patentanspruch 21 oder 22. Die erfindungsgemäße Einrichtung und das erfindungsgemäße Verfahren sind insbesondere dadurch gekennzeichnet, daß zu bestimmten Zeitpunkten Informationen über den aktuellen Status der Überwachung bereitgestellt werden, unabhängig davon, ob ein Alarm aufgetreten ist oder nicht. Die überwachende Stelle hat damit die Möglichkeit festzustellen, ob sich die erfindungsgemäße Einrichtung im betriebsfähigen Zustand befindet. Meldet sich die Einrichtung nach einer vorgegebenen maximalen Zeitspanne nicht bei der überwachenden Stelle, kann diese davon ausgehen, daß ein Alarm aufgetreten ist.

Vorteilhafte Ausgestaltungen sind den abhängigen Patentansprüchen zu entnehmen.

Im folgenden werden zwei Ausführungsbeispiele der Erfindung unter Zuhilfenahme der Figuren 1 bis 6 erläutert. Es zeigen:
- Fig. 1: ein schematische Darstellung eines erfindungsgemäßen Systems,
- Fig. 2: eine schematische Darstellung einer erfindungsgemäßen Einrichtung des Systems aus Fig. 1,
- Fig. 3: einen schematisch dargestellten Aufbau einer erfindungsgemäßen Einrichtung des Systems aus Fig.1,
- Fig. 4: einen schematisch dargestellten Aufbau eines weiteren erfindungsgemäßen Einrichtung des Systems aus Fig. 1,
- Fig. 5: die Vorderseite einer ISDN-S-BOX Einrichtung und
- Fig. 6: die Rückseite einer ISDN-S-BOX Einrichtung.

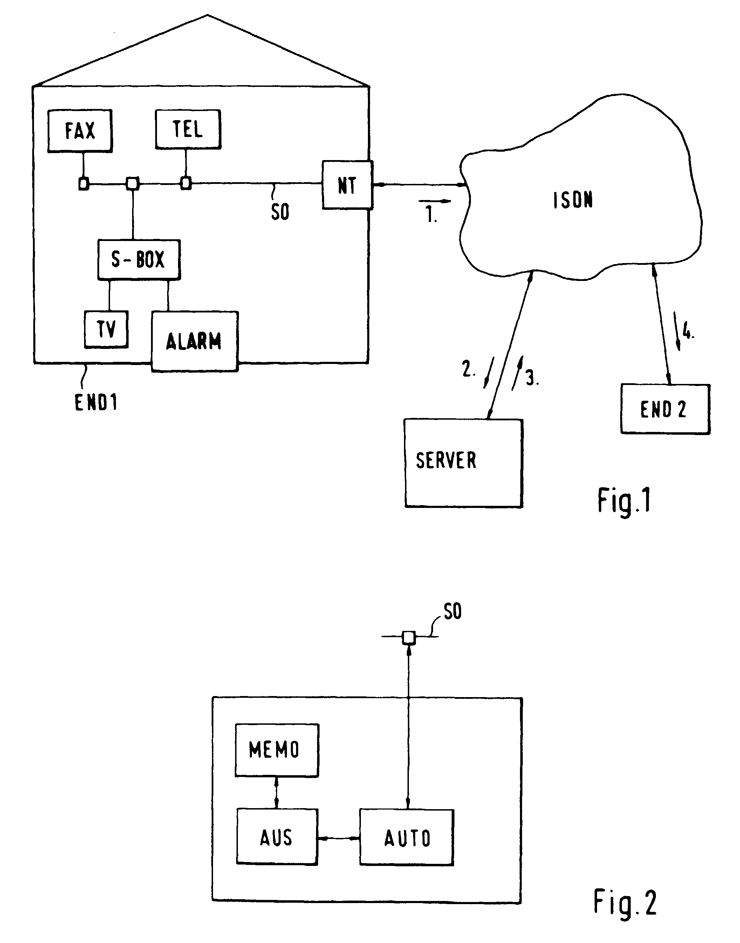

Das erste Ausführungsbeispiel wird nun unter Zuhilfenahme der Figuren 1 bis 4 erläutert. Fig. 1 zeigt ein erfindungsgemäßes System SYS zur telemetrischen Überwachung. Das System SYS beinhaltet drei Endstellen, eine erste END1, eine zweite SERVER und eine dritte END2 sowie ein mit den Endstellen END1, SERVER, END2 verbundenes Telekommunikationsnetz ISDN. Die erste Endstelle END1 soll überwacht werden. Die zweite Endstelle SERVER übernimmt die Aufgabe der überwachenden Stelle. Die dritte Endstelle END2 ist der Ort, an dem sich der Besitzer der Endstelle END1 während der Überwachung aufhält. Der Dienst der Endstelle SERVER besteht darin, den Besitzer am Ort der Endstelle END2 über die aktuellen Status der Überwachung der Endstelle END1 zu informieren. Z.B. ist die Endstelle END1 eine Immobilie. Der Besitzer dieser Immobilie möchte in seinem Urlaub, den er am Ort der Endstelle END2 verbringt, über den aktuellen Status der Überwachung informiert werden. Er beauftragt einen Service-Provider, der sich am Ort der Endstelle SERVER befindet, seine Immobilie am Ort der Endstelle END1 zu überwachen. Die Endstelle END1 ist über einen Netzabschluß NT und das Telekommunikationsnetz ISDN mit der Endstelle SERVER verbunden. Das Telekommunikationsnetz ISDN ist beispielsweise als digitales diensteintegrierendes digitales Netz ausgeführt. Der Netzabschluß NT ist hausintern über einen S0-Bus S0 mit mehreren Endgeräten verbunden. So ist an den Netzabschluß NT z.B. ein Faxgerät FAX und ein ISDN-Telefon TEL angeschlossen. Ferner ist der S0-Bus S0 mit einer Einrichtung S-BOX verbunden. Dem ISDN-Telefon kann bei einem ISDN Basisanschluß, der eine dreifache Rufnummernvergabe erlaubt, die erste Rufnummer, dem Faxgerät FAX die zweite Rufnummer und der Einrichtung S-BOX die dritte Rufnummer zugeordnet werden.

Die Einrichtung S-BOX dient der Überwachung der Immobilie. Sie hat die Aufgabe zu bestimmten Zeitpunkten Wählverbindungen zur Endstelle SERVER aufzubauen und über diese Wählverbindungen den aktuellen Status der Überwachung der Endstelle SERVER mitzuteilen. Die Mitteillungen erfolgen in Form von Bildinformationen, die ein Abbild eines Raumes wiederspiegeln. Die Endstelle SERVER empfängt diese Bildinformationen und leitet sie an die Endstelle END2, zum Urlaubsort des Besitzers weiter, der damit immer aktuell über den Status der Überwachung informiert ist. Neben der Übertragung von Alarmmeldungen, nach deren Erhalt der Service Provide geeignete Maßnahmen ergreifen kann, z.B. Informieren der Polizei, werden zu bestimmten Zeitpunkten auch Bildinformationen übermittelt obwohl kein Alarm aufgetreten ist. Letztere Bildinformationen dienen dazu, den Besitzer darüber zu informieren, daß kein Alarm aufgetreten ist, und als Beweis dafür wird dem Besitzer das aktuelle Abbild eines Raumes übertragen, so daß sich der Besitzer anhand der graphischen Darstellung, die zusätzlich beispielsweise mit einem Zeitstempel versehen und/oder eine am überwachten Ort aufgestellte Uhr zeigt, selber überzeugen kann, daß alles in Ordnung ist.

Die Abkürzung S-BOX steht für Sicherheits-BOX, Safety-BOX oder Security-BOX. Die Abkürzung S-BOX kann zusätzlich mit dem Kürzel ISDN kombiniert werden, z.B. ISDN-S-BOX, um die Möglichkeit der Anwendung für das diensteintegrierende digitale Netz hervorzuheben. Es ist auch möglich die S-BOX in anderen Telekommunikationssystemen als dem ISDN anzuwenden. Z.B. ist das Telekommunikationsnetz als Funknetz ausgeführt, dann kann die Abkürzung S-BOX kann zusätzlich mit dem Kürzel MOBILE oder DECT kombiniert werden, z.B. MOBILE-S-BOX oder DECT-S-BOX, um die Möglichkeit der Anwendung für das Funknetz hervorzuheben. Unabhängig von der Ausführung des Telekommunikationsnetzes kann die Abkürzung S-BOX zusätzlich mit dem Kürzel INTERNET kombiniert werden, z.B. INTERNET-S-BOX, um die Möglichkeit der Anwendung für das das Internet hervorzuheben. Je nach Art der Ausgestaltung des Telekommunikationsnetzes ist die Einrichtung S-BOX mit einer entsprechenden Schnittstelle versehen, z.B. einer Antenne bei einer Verbindung zu einem Funknetz, und die automatische Wähleinrichtung derart ausgeführt, das sie die Protokolle des jeweiligen Telekommunikationsnetzes unterstützt, beim ISDN z.B. das E-DSS1 Protokoll. Die Einrichtung S-BOX ist eine Überwachungseinrichtung, die es ermöglicht die Überwachung insbesondere einer Immobilie sicherer zu gestalten.

Zum Verfahrensablauf: 1. Der Besitzer der Endstelle END1 verläßt seine Immobilie und aktiviert die Einrichtung S-BOX. Zu bestimmten Zeitpunkten und in Fällen, in denen ein Alarm auftritt direkt nach Erkennen des Alarms baut die Einrichtung S-BOX vollautomatisch eine Wählverbindung zu einer vorgegebenen Rufnummer der Endstelle SERVER über das diensteintegrierende digitale Netz ISDN auf. Über die Wählverbindungen werden Bildinformationen ins diensteintegrierende digitale Netz ISDN und 2. zur Endstelle SERVER übertragen. Die Bildinformationen zeigen ein Abbild des zu überwachenden Bereichs, z.B. Eingangsbereich der Wohnung und/oder Balkontüre, usw.. 3. Die Endstelle SERVER baut vollautomatisch eine Wählverbindung zu einer vorgegebenen Rufnummer der Endstelle END2 über das diensteintegrierende digitale Netz ISDN auf, wenn die empfangenen Bildinformationen keine Alarmmeldung enthalten. Über die Wählverbindungen werden Bildinformationen ins diensteintegrierende digitale Netz ISDN und 4. zur Endstelle END2 übertragen. Zusätzlich wird bei einer Alarmmeldung der Alarmmeldung nachgegangen, z.B. ein Sicherheitsdienst oder die Polizei informiert.

Die Endstelle END2 kann auch auf andere Art und Weise mit der Endstelle SERVER verbunden sein. Z.B. ist eine Verbindung über ein Funknetz möglich. Die Endstelle END2 kann dann auch als Mobilfunkstation mit oder ohne integriertem Bildschirm zur Darstellung von Bildinformationen ausgeführt sein. Das Funknetz ist z.B. als sog. GSM-Netz ausgeführt.

Die Bildinformationen können auch zu einem mit Endstelle END2 verbundenen Faxgerät übertragen werden. Dann ist u.U. eine Protokollumwndlung und -anpassung zwischen empfangenen und ausgesandten Bildinformationen in der Endstelle SERVER durchzuführen.

Das erste Ausführungsbeispiel wird nun weiter unter Zuhilfenahme der Fig. 2 erläutert. Fig. 2 zeigt die erfindungsgemäße Einrichtung S-BOX aus Fig. 1.

Die Einrichtung S-BOX der ersten Endstelle END1 des Telekommunikationsnetzes ISDN beinhaltet einen Zwischenspeicher MEMO zum Zwischenspeichern von Bildinformationen, eine Auswerteeinrichtung AUS, die geeignet ist, sequentiell Bildinformationen zu empfangen, im Zwischenspeicher MEMO zwischenzuspeichern und Abweichungen und Übereinstimmungen zwischen zwei Bildinformationen festzustellen, und eine automatische Wähleinrichtung AUTO zum automatischen Aufbau einer Wählverbindung zur zweiten, von der ersten Endstelle END1 räumlich getrennten und mit dem Telekommunikationsnetz ISDN verbundenen Endstelle SERVER, die eine vorgegebene Rufnummer aufweist, und zur Übertragung einer aktuellen Bildinformation zusammen mit einer Alarmmeldung für den Fall, daß die Auswerteeinrichtung AUS eine Abweichung zwischen der aktuellen und einer weiteren Bildinformation feststellt.

Die Auswerteeinrichtung AUS ist beispielsweise als Prozessor ausgeführt, z.B. als Mikroprozessor oder als DSP (=Digital Signal Processor). Ferner beinhaltet die Auswerteeinrichtung AUS einen Analog/Digital-Umsetzer zur Umsetzung der analogen Bildinformationen, z.B. aufgenommen durch eine Kamera, in digitale Bildinformationen, die über das diensteintegrierende digitale Netz ISDN übertragen werden. Ferner beinhaltet die Auswerteeinrchtung AUS eine Kodierer, um die digitalen Bildinformationen zu kodieren und an das Protokoll des ISDN anzupassen. Des weiteren ist ein Digital/Analog-Umsetzer und ein Dekodierer vorgesehen, um empfangene digitale Signale, z.B. von der Endstelle SERVER, zu dekodieren und in analoge Signale umzusetzen, z.B. zwecks Darstellung auf einem Bildschirm.

Die automatische Wähleinrichtung AUTO ist geeignet, zu bestimmten Zeitpunkten die aktuelle Bildinformation über die Wählverbindung zur zweiten Endstelle SERVER für den Fall zu übertragen, daß die Auswerteeinrichtung AUS eine Übereinstimmung zwischen der aktuellen und einer weiteren Bildinformation feststellt.

Die Einrichtung S-BOX beinhaltet einen Zufallsgenerator, der geeignet ist, die Zeitpunkte zu ermitteln, zu denen die aktuelle Bildinformation über die Wählverbindung zur zweiten Endstelle END2 übertragen werden soll, für den Fall, daß die Auswerteeinrichtung AUS eine Übereinstimmung zwischen der aktuellen und einer weiteren Bildinformation feststellt. Der Besitzer der Endstelle END1 schaltet bei Verlassen seiner Immobilie den Zufallsgenerator ein. Der Zufallsgenerator generiert fortlaufend Zeitpunkte, zu denen die dann aktuelle Bildinformation gespeichert und anschließend über eine Wählverbindung zur Endstelle SERVER übertragen wird. Von der Endstelle SERVER wird sie anschließend zur Endstelle END2 übertragen. Der Besitzer erhält somit stichprobenartig Informationen über den aktuellen Status der Überwachung seiner Immobilie. Unabhängig von der stochastischen Aussendung der Bildinformationen, wird bei Auftreten eines Alarms die dann aktuelle Bildinformation direkt zur Endstelle SERVER übertragen, um dem Alarm direkt nachgehen zu können. Beispielsweise ist zusätzlich eine maximale Zeitspanne vorgesehen, die der Zufallsgenerator bei der Generierung der Zeitpunkte berücksichtigen muß. Z.B. dürfen zwei aufeinanderfolgende Zeitpunkte nicht länger als 24 Stunden auseinanderliegen. Empfängt die Endstelle SERVER nicht spätestens 24 Stunden nach Empfang der letzten aktuellen Bildinformation eine neue Bildinformation, kann sie davon ausgehen, daß ein Alarm aufgetreten ist, und kann entsprechende Maßnahmen einleiten.

Alternativ beinhaltet die Einrichtung S-BOX eine programmierbare Steuereinheit, die geeignet ist, die Zeitpunkte zu programmieren, zu denen die aktuelle Bildinformation über die Wählverbindung zur zweiten Endstelle END2 übertragen werden soll, für den Fall, daß die Auswerteeinrichtung AUS eine Übereinstimmung zwischen der aktuellen und einer weiteren Bildinformation feststellt. Die Steuereinheit ist beispielsweise über ein extern an der Einrichtung S-BOX angebrachtes Eingabemittel, z.B. eine Tastatur, bedienbar. Der Besitzer der Endstelle END1 programmiert bei Verlassen seiner Immobilie die Einrichtung S-BOX derart, daß diese zu fest vorgegebenen, programmierten Zeitpunkten aktuelle Bildinformationen zur Endstelle SERVER sendet. Dies hat den Vorteil, daß der Besitzer frei in seiner Wahl der Zeitpunkte ist und diese individuell bestimmen kann, z.B. Aussenden von Bildinformationen einmal täglich, zweimal täglich, usw..

Die Auswerteeinrichtung AUS ist geeignet, jede empfangene Bildinformation mit einer Referenzbildinformation zu vergleichen, um Abweichungen und Übereinstimmungen zwischen diesen zwei Bildinformationen festzustellen. Die Referenzbildinformation ist für alle Vergleiche diesselbe. Dies hat gegenüber einem Vergleich mit der jeweils vorangegangenen Bildinformation den Vorteil, daß auch langsame Bewegungen, z.B. eines Einbrechers, die von einem (Video-)Bewegungsmelder nicht registriert werden können, nach Ablauf einer gewissen Zeitspanne registriert werden können, da dann die aktuelle Bildinformation von der Referenzbildinformation über ein vorgegebenes und registrierbares Maß hinaus abweicht. Dadurch wird also die Empfindlichkeit zur Registrierung eines Alarmes erhöht.

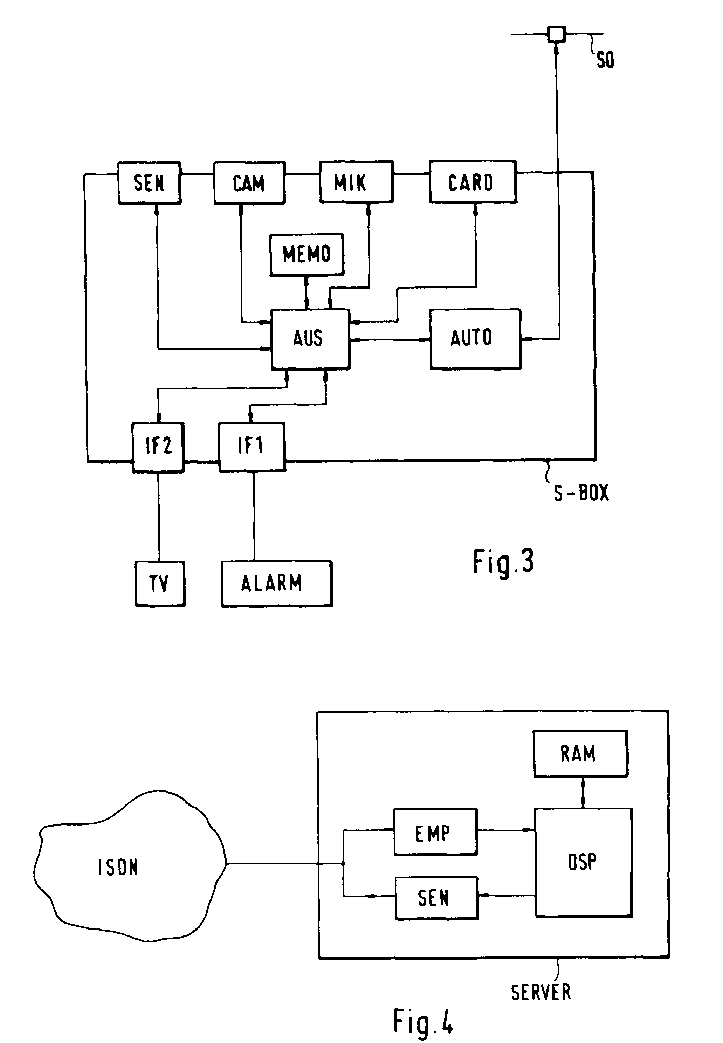

Das erste Ausführungsbeispiel wird nun weiter unter Zuhilfenahme der Fig. 3 erläutert. Fig. 3 zeigt die erfindungsgemäße Einrichtung S-BOX aus Fig. 1 in detaillierterer Form.

Die Einrichtung S-BOX beinhaltet alle Bausteine der Einrichtung S-BOX aus Fig. 2 und zusätzlich eine Schnittstelle IF1 zu einer Alarmanlage ALARM. Die Einrichtung S-BOX ist über die Schnittstelle IF1 telemetrisch durch die Alarmanlage ALARM aktivierbar und deaktivierbar. Die Alarmanlage ALARM beinhaltet beispielsweise eine Kamera zur Generierung der Bildinformationen, die zur Auswerteeinrichtung AUS weitergeleitet werden. Die Alarmanlage ALARM ist beispielsweise über eine Infrarot-Fernbedienung aktivierbar und deaktivierbar. Vergleichbar einem Autoschlüssel kann die Infrarot-Fernbedienung in den Haustürschlüssel integriert werden und die Alarmanlage ALARM durch Drücken des Schlüssels nach Verlassen der Immobilie aktiviert und bei Rückkehr deaktiviert werden. Durch Aktivierung der Alarmanlage ALARM wird automatisch die Einrichtung S-BOX aktiviert, so daß eine Überwachung der Immobilie bei jedem Verlassen der Immobilie durch den Besitzer aktiviert werden kann. Bei Rückkehr deaktivert der Besitzer die die Alarmanlage ALARM vor Betreten seiner Immobilie, wodurch automatisch auch die Einrichtung S-BOX deaktiviert wird und somit die Überwachung stoppt. Somit wird die Immobilie auch bei kürzerer Abwesenheit des Besitzers, z.B. Einkaufen, überwacht.

Die automatische Wähleinrichtung AUTO ist geeignet, bei Aktivierung der Einrichtung S-BOX eine Startinformation über eine Wählverbindung zur zweiten Endstelle SERVER zu übertragen und bei Deaktivierung der Einrichtung S-BOX eine Stopinformation über eine Wählverbindung zur zweiten Endstelle END2 zu übertragen. Bei jeder Aktivierung der Alarmanlage ALARM und der dadurch bedingten Aktivierung der Einrichtung S-BOX wird automatisch eine Wählverbindung zu der bekannten Rufnummer der Endstelle SERVER aufgebaut und eine Startinformation übertragen. Der Service-Provider ist dann darüber informiert, daß der Besitzer die Immobilie verlassen hat und die Überwachung startet. Bei Rückkehr des Besitzers und der Deaktivierung der Einrichtung S-BOX wird durch die automatische Übermittlung des Stopinformation dem Service-Provider angezeigt, daß die Überwachung nun beendet ist. Durch eine an die Einrichtung S-BOX angebrachte Leuchte, z.B. eine LED (=Light Emitting Device), kann der Besitzer überprüfen, ob die Einrichtung S-BOX deaktiviert ist. Durch eine an der Haustüre angebrachte Leuchte, z.B. eine LED, kann der Besitzer überprüfen, ob die Alarmanlage aktiviert oder deaktiviert ist.

Die Startinformation beinhaltet eine Information über die bestimmten Zeitpunkte, zu denen die aktuelle Bildinformation über die Wählverbindung zur zweiten Endstelle SERVER übertragen werden soll. Zusammen mit der Aktivierung können auch die Zeitpunkte zu denen eine Übertragung der aktuellen Bildinformationen vorgesehen ist, z.B. vom Besitzer selbst programmiert oder durch den Zufallsgenerator generiert, zum Service-Provider übermittelt werden. Dadurch ist der Service-Provider stets darüber informiert, wann er die nächste aktuelle Bildinformation zu erwarten hat bzw. bei Verwendung des Zufallsgenerators welche Zeitspanne maximal zwischen zwei aufeinanderfolgenden Bildinformationen verstreichen darf und kann folglich direkt erforderliche Maßnahmen einleiten, wenn eine erwartete Bildinformation ausbleibt.

Die Einrichtung S-BOX beinhaltet eine Kamera CAM zur Überwachung eines Raumes und zur Generierung der Bildinformationen oder ist mit einer solchen, z.B. über die Alarmanlage ALARM verbunden.

Es ist ferner ein Sensor SEN vorgesehen, der als Bewegungsmelder fungiert und ebenfalls einen Alarm auslösen kann, woraufhin eine Wählverbindung zur Endstelle SERVER aufgebaut wird.

Anstelle oder zusätzlich zum Sensor können Kamera CAM und Auswerteeinrichtung AUS auch einen integrierten Videobewegungsmelder enthalten. Dadurch können auf einfache Art und Weise Abweichungen zwischen Bildinformationen festgestellt werden, was zur Feststellung eines Alarms dienen kann.

Des weiteren ist ein Mikrophon MIK vorgesehen, um auch Tonsignale zur Endstelle SERVER übertragen zu können. Das Mikrophon dient beispielsweise als Lautsprecheinrichtung bei einer Kommunikation des Besitzers mit dem Service-Provider.

Die Einrichtung S-BOX beinhaltet eine Schnittstelle IF2 zu einem Fernsehgerät TV, um die Bildinformation zeitweise auf dem Fernsehgerät TV darzustellen und so die Ausrichtung der Kamera CAM zu überprüfen. Will der Besitzer beispielsweise überprüfen, ob die von ihm ausgewählte Kamera position den von ihm gewollten Bildausschnitt zeigt, so braucht er die Einrichtung S-BOX lediglich mit dem Fernsehgerät TV verbinden und kann auf dem Bildschirm des Fernsehgerätes die Ausrichtung der Kamera CAM überprüfen.

Der Dekoder der Auswerteeinrichtung AUS ist beispielsweise geeignet, die Bildsignale der Endstelle SERVER, an die beispielsweise ein Bildtelefon angeschlossen ist, das die Bildsignale aussendet, zu dekodieren. Dann kann bei einer Kommunikation des Besitzers mit dem Service-Provider das Abbild der diensthabenden Überwachung person auf dem Fernsehgerät TV dargestellt werden.

Die automatische Wähleinrichtung AUTO ist geeignet, die aktuelle Bildinformation zusammen mit einem Zeitstempel über die Wählverbindung zur zweiten Endstelle END2 zu übertragen. Durch diese Maßnahme wird erreicht, daß der Empfänger der Bildinformation einen Beleg darüber hat, wann die Bildinformation aufgenommen oder wann sie ausgesendet wurde. Dies erhöht die Beweiskraft der Bildinformation und gibt dem Empfänger einen Anhaltspunkt über die Aktualität der Bildinformation.

Die Einrichtung S-BOX beinhaltet eine Kartenleseeinrichtung CARD zum Einführen und Lesen einer Chipkarte auf der die vorgegebene Rufnummer der zweiten Endstelle SERVER auf der Chipkarte gespeichert ist. Es kann verschiedene Service-Provider geben, die den gleichen Dienst anbieten, nämlich telemetrisches Überwachen einer Immobilie. Die Einrichtung S-BOX arbeitet unabhängig vom Service-Provider immer auf die gleiche Art und Weise. Der Besitzer einer Immobilie schließt einen Vertrag mit einem Service-Provider. Auf einer vom Service-Provider ausgegebenen Chipkarte ist beispielsweise die Rufnummer des Service-Providers gespeichert, die von der Kartenleseeinrichtung der Einrichtung S-BOX ausgelesen wird und zur automatischen Wähleinrichtung übertragen wird, die somit darüber in Kenntnis gesetzt wird, welche Rufnummer sie im Falle eines Alarmes und zu den bestimmten Zeitpunkten anwählen soll. Zusätzlich zur Rufnummer können auf der Chipkarte weitere Informationen gespeichert sein, z.B. eine Besitzer-individuelle oder eine Service-Provider spezielle Geheimnummer. Diese Geheimnummer dient der Identifikation und muß bei jeder Übertragung mitübertragen werden, um der Einrichtung S-BOX den Zugang zum Service-Provider zu ermöglichen. Zusätzlich zur Rufnummer kann auf der Chipkarte z.B. ein Besitzer-individueller oder eine Service-Provider spezieller Schlüssel gespeichert sein. Dieser Schlüssel dient der Identifikation und der gesicherten Übertragung durch Verschlüsselung der zu übertragenden Informationen. Jede Übertragung muß mit dem Schlüssel verschlüsselt werden, um der Einrichtung S-BOX den Zugang zum Service-Provider zu ermöglichen.

Die Aktivierung und Deaktivierung der Einrichtung S-BOX kann anstelle über die Alarmanlage ALARM auch über eine zusätzliche, in die Einrichtung S-BOX integrierte Schnittstelle zum drahtlosen Empfang von Aktivierungs- und Deaktivierungssignalen erfolgen. Die Übermittlung erfolgt beispielsweise über Infrarotsignale oder über Funk. Zusätzlich kann die Aktivierung und Deaktivierung von der Chipkarte abhängig gemacht werden. Befindet sich die Chipkarte in der Einrichtung S-BOX, ist diese deaktiviert, befindet sie sich außerhalb, ist diese aktiviert. Die Aktivierung und Deaktivierung kann mit einer Totzeit verknüpft sein. Z.B. erfolgt die Deaktivierung durch ein Deaktivierungssignal über Funk. Zusätzlich muß nach einer vorgegebenen oder programmierbaren Zeitspanne nach der Deaktivierung die Chipkarte in die Einrichtung S-BOX eingebracht werden, um diese entgültig zu deaktivieren. Geschieht dies nicht, so sendet die Einrichtung S-BOX eine Alarmmeldung an die Einrichtung SERVER aus.

Die Funktionalität der Einrichtung S-BOX kann auch in ein Bildtelefon integriert sein. Ein Bildtelefon, z.B. ein ISDN-Bildtelefon, hat bereits Bestandteile der Einrichtung S-BOX, so daß zumindest ein Teil der bestehenden Bestandteile, z.B. die Kamera, das Mikrophon, der Prozessor und der Speicher zur Realisierung der Funktionalität der Einrichtung S-BOX mitverwendet werden können. Dadurch wird ein Bildtelefon realisiert, daß neben den üblichen Leistungsmerkmalen, wie Bildtelefonie, Rufnummernanzeige, Lautsprecheinrichtung, automatische Wähleinrichtung, usw. zusätzlich eine Überwachungsfunktion übernehmen kann. Für die Anbindung des Bildtelefons an ein anderes Telekommunikationsnetz als das diensteintegrierende digitale Netz ist eine entsprechende Schnittstelle vorzusehen, z.B. eine Antenne zur Anbindung an ein Funknetz und ein Protokolladapter zur Anpassung der Protokolle.

Die Einrichtung S-BOX wird über eine 220 Volt Stromversorgung inklusive Adapter gespeist. Für den Fall, daß die Stromversorgung ausfällt, ist eine Batterie vorgesehen, die die Einrichtung lokal speist, so daß eine Überwachung auch im Falle eines regionalen Stromausfalls gesichert ist. Alternativ oder zusätzlich ist die Einrichtung S-BOX geeignet mit einer Notstromversorgung, die über das Telekommunikationsnetz geliefert wird, z.B. -40 Volt, zu arbeiten. Die Einrichtung S-BOX ist damit vergleichbar einem Telefon sowohl über eine lokal zugeführte Stromversorgung als auch über eine ferngespeiste Notstromversorgung betreibbar.

Das erste Ausführungsbeispiel wird nun weiter unter Zuhilfenahme der Fig. 4 erläutert. Fig. 4 zeigt die erfindungsgemäße Einrichtung SERVER aus Fig. 1 in detaillierterer Form.

Die Einrichtung SERVER des Telekommunikationsnetzes ISDN ist dadurch gekennzeichnet, daß sie eine Empfangseinrichtung EMP, einen Speicher RAM, eine Steuereinheit DSP und eine Sendeeinrichtung SEN beinhaltet. Die Empfangseinrichtung EMP ist geeignet, die aktuelle Bildinformation von mindestens einer Einrichtung S-BOX zu empfangen. Im Speicher RAM sind die Rufnummer der mindestens einen Einrichtung S-BOX und mindestens eine weitere Rufnummer abgespeichert. Jeder Einrichtung S-BOX ist mindestens eine weitere Rufnummer zugeordnet. Die Steuereinheit DSP, die beispielsweise als Prozessor, z.B. als Mikroprozessor oder als digitaler Signalprozessor ausgeführt ist, ist geeignet, die Rufnummer der mit der Empfangseinrichtung verbundenen Einrichtung S-BOX zu detektieren und die der Rufnummer der mit der Empfangseinrichtung verbundenen Einrichtung S-BOX zugeordnete weitere Rufnummer zu ermitteln sowie die aktuelle, empfangene Bildinformation zusammen mit der ermittelten Rufnummer zur Sendeeinrichtung SEN weiterzuleiten. Die Einrichtung SERVER ist beispielsweise als Bildtelefon ausgeführt. Dann kann über die automatische Rufnummernanzeige auf einfache Art und Weise die Rufnummer der rufenden Endstelle S-BOX detektiert werden. Durch Vergleich der detektierten Rufnummer mit den abgespeicherten Rufnummern im Speicher RAM wird zunächst ermittelt, ob die Endstelle S-BOX für die Überwachung vorgesehen ist und ob ein gültiger Vertrag besteht. Ist die detektierte Rufnummer nicht im Speicher RAM enthalten, so informiert die Endstelle SERVER die Endstelle S-BOX darüber. Eine Überwachung erfolgt dann nicht. Ist die detektierte Rufnummer im Speicher enthalten, so ermittelt die Steuereinrichtung DSP die zugehörige weitere Rufnummer. Die Rufnummer einer Einrichtung S-BOX ist beispielsweise tabellarisch zusammen mit der weiteren Rufnummer abgespeicher und so auf einfache Art und Weise zugänglich. Bei Abschluß eines Vertrages zwischen Besitzer und Service-Provider teilt der Besitzer dem Service-Provider beispielsweise die Rufnummer der Endstelle END1 und die weitere Rufnummer mit. Die weitere Rufnummer ist beispielsweise die Rufnummer der Endstelle END2 des Urlaubsortes. Der Besitzer kann die weitere Rufnummer nachträglich ändern, indem er den Service-Provider kontaktiert und eine geänderte weitere Rufnummer mitteilt. Dies kann z.B. automatisch geschehen, indem der Besitzer vor Verlassen seiner Immobilie die weitere Rufnummer in seine Einrichtung S-BOX programmiert, z.B. über die programmierbare Steuereinheit, die zusätzlich zur Programmierung der bestimmten Zeitpunkte geeignet ist, die Programmierung der weiteren Rufnummer durchzuführen, und diese weitere Rufnummer mit der Startinformation nach Aktivierung der Einrichtung S-BOX mit zur Endstelle SERVER übertragen wird. Anstelle einer weiteren Rufnummer können auch bespielsweise zwei angegeben werden, damit z.B. für den Fall, daß die erste nicht erreichbar ist die zweite als Ersatzrufnummer nutzbar ist. Die Sendeinrichtung SEN ist geeignet, eine Wählverbindung zu der weiteren Rufnummer aufzubauen und die aktuelle Bildinformation über die Wählverbindung weiterzuleiten. Die Sendeeinrichtung ist beispielsweise als automatische Wähleinrichtung ausgelegt.

Die Steuereinheit DSP ist alternativ geeignet, einen der aktuellen, empfangenen Bildinformation zugeordneten Text zu ermitteln. Die Sendeinrichtung SEN ist geeignet, anstelle der aktuelle Bildinformation den ermittelten Text über die Wählverbindung weiterzuleiten. Zusätzlich zur weiteren Rufnummer wird in tabellarischer Form neben der weiteren Rufnummer ein, z.B. vom Besitzer selbst, vordefinerter Text abgespeichert. Für den Fall, daß bei der weiteren Rufnummer kein Endgerät für den Empfang von Bildinformationen ausgelegt ist, z.B. eine Mobilfunkstation, wird anstelle der aktuellen Bildinformation ein vordefinierter Text, z.B. zusammen mit einem Zeitstempel übertragen. Der Text lautet z.B.: "Herr/Frau ..., alles o.k., 04.06.1998, 10:00 Uhr" und wird z.B. als e-mail übertragen.

An die Endstelle END2 ist der Anschluß verschiedener Engeräte möglich. Wenn das Endgerät ein Bildtelefon ist, so kann es Bildinformationen empfangen. Die Endstelle SERVER wird dann aktuelle Bildinformationen zum Bildtelefon übertragen. Wenn das Endgerät ein Faxgerät ist, so kann es keine Bildinformationen empfangen, aber dafür eine graphische Darstellung eines Bildes. Die Endstelle SERVER enthält einen Umsetzer und/oder eine Verarbeitungseinheit, die beispielsweise im Prozessor integriert sein kann, um die aktuelle Bildinformation in eine graphische Darstellung umzusetzen oder zumindest in Form eines für ein Faxgerät kompatiblen Protokolls umzusetzen. Die vom Faxgerät empfangbare und darstellbare umgesetzte Bildinformation, z.B. in Form eines Textformats, wird dann zum Faxgerät übertragen. Wenn das Endgerät ein analoges Telefon oder ein Funktelefon ist, so kann es keine Bildinformationen empfangen, aber dafür Tonsignale. Zusätzlich zur weiteren Rufnummer wird in tabellarischer Form neben der weiteren Rufnummer ein, z.B. vom Besitzer selbst vordefinertes Tonsignal abgespeichert. Anstelle der aktuellen Bildinformation wird ein vordefiniertes Tonsignal, z.B. zusammen mit einem Zeitstempel übertragen. Das Tonsignal hat z.B. folgenden Inhalt: "Herr/Frau ..., alles o.k., 04.06.1998, 10:00 Uhr".

Zusammenfassend werden im folgenden zwei Verfahren zur Erläuterung des ersten Ausführungsbeispiels beschrieben. Das erste Verfahren dient der Weiterleitung einer Bildinformation und ist gekennzeichnet durch folgende Schritte: 1. Empfang der Bildinformation über eine Wählverbindung eines Telekommunikationsnetzes ISDN, z.B. überträgt die Einrichtung S-BOX der Endstelle END1 eine Bildinformation die den aktuellen Status der Überwachung eines Raumes wiedergibt über eine ISDN-Wählverbindung zur Endstelle SERVER, 2. Detektion der Rufnummer der die Bildinformation ausgesandten Endstelle, z.B. detektiert die Endstelle SERVER die Rufnummer der Endstelle END1 über die automnatische Rufnummernanzeige eines ISDN-Telefons, 3. Ermittlung einer der detektierten Rufnummer zugeordneten Rufnummer, z.B. hat die Endstelle SERVER Zugriff auf einen Speicher RAM, in dem alle Rufnummern der mit der Endstelle SERVER unter Vertrag stehenden Endstellen END1 abgespeichert sind, wobei jeder Rufnummer einer Endstelle END1 mindestens eine durch den Besitzer der Endstelle END1 vorgegebenen Rufnummer zugeordnet und abgespeichert ist, die dann auf einfache Art und Weise durch Vergleich der detektierten Rufnummer mit den abgespeicherten ermittelt werden kann, 4. Aufbau einer Wählverbindung zu der ermittelten Rufnummer, z.B. mittels einer automatischen Wähleinrichtung eines ISDN-Telefons, 5. Weiterleiten der Bildinformation über die Wählverbindung, z.B. mittels einer Übertragungeinrichtung eines ISDN-Telefons.

Das zweite Verfahren ist gekennzeichnet durch folgende Schritte: 1. Empfang einer Bildinformation über eine Wählverbindung eines Telekommunikationsnetzes ISDN, siehe erstes Verfahren, 2. Detektion der Rufnummer der die Bildinformation ausgesandten Endstelle END1, siehe erstes Verfahren, 3. Ermittlung einer der detektierten Rufnummer zugeordneten Rufnummer, siehe erstes Verfahren, und eines der Bildinformation zugeordneten Textes oder eines Tonsignals, z.B. ist im Speicher RAM jeder Rufnummer einer Endstelle END1 mindestens ein durch den Besitzer der Endstelle END1 vorgegebenen Text oder ein Tonsignal zugeordnet und abgespeichert, weil die zugeordnete Rufnummer keine Bildinformationen empfangen kann, z.B. Faxgerät oder analoges Telefon, wobei der vorgegebene Text oder das vorgegebene Tonsignal dann auf einfache Art und Weise durch Vergleich der detektierten Rufnummer mit den abgespeicherten ermittelt werden kann, 4. Aufbau einer Wählverbindung zu der ermittelten Rufnummer, siehe erstes Verfahren, 5. Weiterleiten des ermittelten Textes oder des Tonsignals über die Wählverbindung, siehe erstes Verfahren.

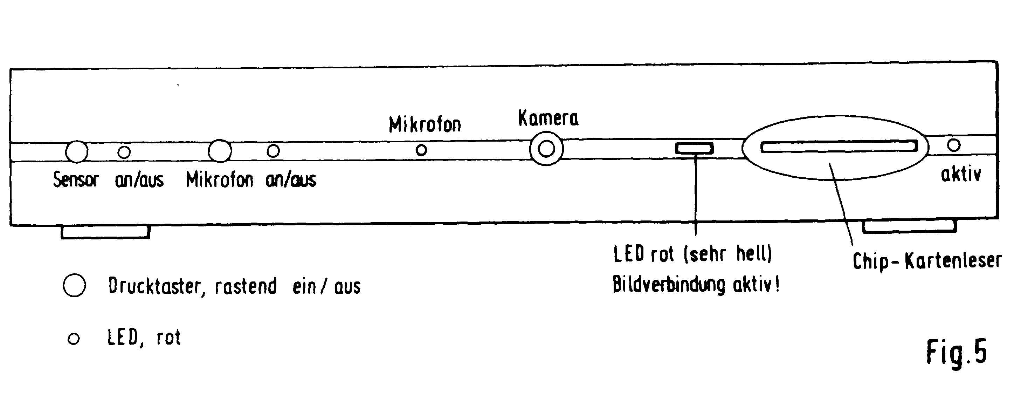

Fig. 5 zeigt die Vorderseite einer als ISDN-S-BOX ausgeführten Einrichtung S-BOX aus Fig. 1.

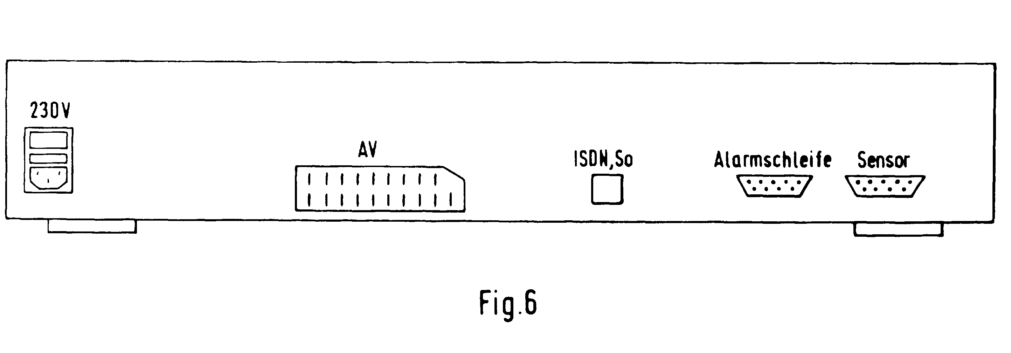

Fig. 6 zeigt die Rückseite einer als ISDN-S-BOX ausgeführten Einrichtung S-BOX aus Fig. 1.

Im folgenden wird das zweite Ausführungsbeispiel erläutert. Das Ausführungsbeispiel betrifft eine Einrichtung S-BOX, die sowohl die Funktion der Einrichtung S-BOX aus Fig. 1 als auch Teile der Funktionen der Einrichtung SERVER aus Fig. 1 übernimmt.

Die Einrichtung S-BOX des zweiten Ausführungsbeispiels wird nun unter Zuhilfenahme der Figuren 1 bis 3 erläutert. Mit gleichem Bezugszeichen versehene Einrichtungen haben die gleiche Funktionalität wie die entsprechenden zu den Figuren 1 bis 3 erläuterten. Die Einrichtung S-BOX der ersten Endstelle END1 des Telekommunikationsnetzes ISDN beinhaltet einen Zwischenspeicher MEMO zum Zwischenspeichern von Bildinformationen, eine Auswerteeinrichtung AUS, die geeignet ist, sequentiell Bildinformationen zu empfangen, im Zwischenspeicher MEMO zwischenzuspeichern und Abweichungen und Übereinstimmungen zwischen zwei Bildinformationen festzustellen, und eine automatische Wähleinrichtung AUTO zum automatischen Aufbau einer Wählverbindung zu einer zweiten, von der ersten Endstelle END1 räumlich getrennten und mit dem Telekommunikationsnetz ISDN verbundenen Endstelle SERVER, die eine vorgegebene Rufnummer aufweist, und zur Übertragung einer aktuellen Bildinformation zusammen mit einer Alarmmeldung für den Fall, daß die Auswerteeinrichtung AUS eine Abweichung zwischen der aktuellen und einer weiteren Bildinformation feststellt.

Die automatische Wähleinrichtung AUTO ist geeignet, zu bestimmten Zeitpunkten die aktuelle Bildinformation über die Wählverbindung zu einer dritten Endstelle END2 für den Fall zu übertragen, daß die Auswerteeinrichtung AUS eine Übereinstimmung zwischen der aktuellen und einer weiteren Bildinformation feststellt. Der Besitzer möchte z.B., daß nur im Falle des Auftreten eines Alarms ein Service-Provider informiert wird, um geeignete Maßnahmen zu ergreifen. Um den aktuellen Status der Überwachung zu übertragen, kann die entsprechende nötige Hard- und Software in die Einrichtung S-BOX implementiert werden. Auf diese Art und Weise wird der Besitzer zu den von ihm selbst bestimmten Zeitpunkten direkt kontaktiert. Bedenken des Besitzers, er würde sobald er außer Haus ist laufend von einer "fremden Person", dem Service-Provider, überwacht können so entgegengetreten werden.

Die Einrichtung S-BOX beinhaltet eine programmierbare Steuereinheit, die geeignet ist, die Rufnummer der dritten Endstelle END2 frei zu programmieren. Die Einrichtung S-BOX beinhaltet dazu beispielsweise die Funktionalität eines ISDN-Bildtelefons. Der Besitzer ist somit in der Lage selbst zu bestimmen, zu welcher Rufnummer die zu den bestimmten Zeitpunkten zu übermittelden Bildinformationen gesendet werden sollen, beispielsweise zu einem Bildtelefon, z.B. an der Rezeption seines Hotels am Urlaubsort.

Die Einrichtung S-BOX beinhaltet eine programmierbare Steuereinheit, die geeignet ist, die Zeitpunkte zu programmieren, zu denen die aktuelle Bildinformation über die Wählverbindung zur dritten Endstelle END2 übertragen werden soll, für den Fall, daß die Auswerteeinrichtung AUS eine Übereinstimmung zwischen der aktuellen und einer weiteren Bildinformation feststellt. Die Einrichtung S-BOX beinhaltet dazu beispielsweise die Funktionalität eines ISDN-Bildtelefons. Der Besitzer ist somit in der Lage selbst zu bestimmen, zu welchen Zeitpunkten zu übermittelnden Bildinformationen gesendet werden sollen, beispielsweise einmal täglich oder zweimal täglich zu einem Bildtelefon, z.B. an der Rezeption seines Hotels am Urlaubsort.

Die Auswerteeinrichtung AUS ist geeignet, die aktuelle Bildinformation mit einer Referenzbildinformation zu vergleichen, um Abweichungen und Übereinstimmungen zwischen diesen zwei Bildinformationen festzustellen. Die Referenzbildinformation ist für alle Vergleiche diesselbe. Dies hat den bereits weiter oben beschriebenen Vorteil.

Die automatische Wähleinrichtung AUTO ist geeignet, zu bestimmten Zeitpunkten anstelle der aktuellen Bildinformation einen bestimmten Text oder ein bestimmtes Tonsignal über die Wählverbindung zur dritten Endstelle END2 für den Fall zu übertragen, daß die Auswerteeinrichtung AUS eine Übereinstimmung zwischen der aktuellen und einer weiteren Bildinformation feststellt. Dies hat die bereits weiter oben beschriebenen Vorteile, z.B. Übermittlung zu einem Faxgerät, einem (tragbaren) Computer oder einer Mobilfunkstation.

## Patentansprüche

1. Einrichtung (S-BOX) einer ersten Endstelle (END1) eines Telekommunikationsnetzes (ISDN), beinhaltend einen Zwischenspeicher (MEMO) zum Zwischenspeichern von Bildinformationen, eine Auswerteeinrichtung (AUS), die geeignet ist, sequentiell Bildinformationen zu empfangen, im Zwischenspeicher (MEMO) zwischenzuspeichern und Abweichungen und Übereinstimmungen zwischen zwei Bildinformationen festzustellen, und eine automatische Wähleinrichtung (AUTO) zum automatischen Aufbau einer Wählverbindung zu einer zweiten, von der ersten Endstelle (END1) räumlich getrennten und mit dem Telekommunikationsnetz (ISDN) verbundenen Endstelle (SERVER), die eine vorgegebene Rufnummer aufweist, und zur Übertragung einer aktuellen Bildinformation zusammen mit einer Alarmmeldung für den Fall, daß die Auswerteeinrichtung (AUS) eine Abweichung zwischen der aktuellen und einer weiteren Bildinformation feststellt,
**dadurch gekennzeichnet,** daß die automatische Wähleinrichtung (AUTO) geeignet ist, zu bestimmten Zeitpunkten die aktuelle Bildinformation über die Wählverbindung zur zweiten Endstelle (SERVER) für den Fall zu übertragen, daß die Auswerteeinrichtung (AUS) eine Übereinstimmung zwischen der aktuellen und einer weiteren Bildinformation feststellt.

2. Einrichtung (S-BOX) nach Anspruch 1, dadurch gekennzeichnet, daß die Einrichtung (S-BOX) einen Zufallsgenerator beinhaltet, der geeignet ist, die Zeitpunkte zu ermitteln, zu denen die aktuelle Bildinformation über die Wählverbindung zur zweiten Endstelle (SERVER) übertragen werden soll, für den Fall, daß die Auswerteeinrichtung (AUS) eine Übereinstimmung zwischen der aktuellen und einer weiteren Bildinformation feststellt.

3. Einrichtung (S-BOX) nach Anspruch 1, dadurch gekennzeichnet, daß die Einrichtung (S-BOX) eine programmierbare Steuereinheit beinhaltet, die geeignet ist, die Zeitpunkte zu programmieren, zu denen die aktuelle Bildinformation über die Wählverbindung zur zweiten Endstelle (SERVER) übertragen werden soll, für den Fall, daß die Auswerteeinrichtung (AUS) eine Übereinstimmung zwischen der aktuellen und einer weiteren Bildinformation feststellt.

4. Einrichtung (S-BOX) nach Anspruch 1, 2 oder 3, dadurch gekennzeichnet, daß die Auswerteeinrichtung (AUS) geeignet ist, jede empfangene Bildinformation mit einer Referenzbildinformation zu vergleichen, um Abweichungen und Übereinstimmungen zwischen diesen zwei Bildinformationen festzustellen, und daß die Referenzbildinformation für alle Vergleiche diesselbe ist.

5. Einrichtung (S-BOX) nach Anspruch 1, dadurch gekennzeichnet, daß die Einrichtung (S-BOX) eine Schnittstelle (IF1) zu einer Alarmanlage (ALARM) beinhaltet, und daß die Einrichtung (S-BOX) über die Schnittstelle telemetrisch durch die Alarmanlage (ALARM) aktivierbar und deaktivierbar ist.

6. Einrichtung (S-BOX) nach Anspruch 5, dadurch gekennzeichnet, daß die automatische Wähleinrichtung (AUTO) geeignet ist, bei Aktivierung der Einrichtung (S-BOX) eine Startinformation über eine Wählverbindung zur zweiten Endstelle (SERVER) zu übertragen und bei Deaktivierung der Einrichtung (S-BOX) eine Stopinformation über eine Wählverbindung zur zweiten Endstelle (SERVER) zu übertragen .

7. Einrichtung (S-BOX) nach Anspruch 6, dadurch gekennzeichnet, daß die Startinformation eine Information über die bestimmten Zeitpunkte beinhaltet, zu denen die aktuelle Bildinformation über die Wählverbindung zur zweiten Endstelle (SERVER) übertragen werden soll.

8. Einrichtung (S-BOX) nach Anspruch 1, dadurch gekennzeichnet, daß die Einrichtung (S-BOX) eine Kamera (CAM) zur Überwachung eines Raumes und zur Generierung der Bildinformationen beinhaltet oder mit einer solchen verbunden ist.

9. Einrichtung (S-BOX) nach Anspruch 8, dadurch gekennzeichnet, daß die Einrichtung (S-BOX) eine Schnittstelle (IF2) zu einem Fernsehgerät (TV) beinhatet, um die Bildinformation zeitweise auf dem Fernsehgerät (TV) darzustellen und so die Ausrichtung der Kamera (CAM) zu überprüfen.

10. Einrichtung (S-BOX) nach Anspruch 1, dadurch gekennzeichnet, daß die automatische Wähleinrichtung (AUTO) geeignet ist, die aktuelle Bildinformation zusammen mit einem Zeitstempel über die Wählverbindung zur zweiten Endstelle (END2) zu übertragen.

11. Einrichtung (S-BOX) nach Anspruch 1, dadurch gekennzeichnet, daß die Einrichtung (S-BOX) eine Kartenleseeinrichtung (CARD) zum Einführen und Lesen einer Chipkarte beinhaltet und die vorgegebene Rufnummer der zweiten Endstelle (SERVER) auf der Chipkarte gespeichert ist.

12. Bildtelefon, dadurch gekennzeichnet, daß die Funktionalität der Einrichtung (S-BOX) nach Anspruch 1 ins Bildtelefon integriert ist.

13. Einrichtung (SERVER) eines Telekommunikationsnetzes (ISDN), dadurch gekennzeichnet, daß die Einrichtung (SERVER) eine Empfangseinrichtung (EMP), einen Speicher (RAM), eine Steuereinheit (DSP) und eine Sendeeinrichtung (SEN) beinhaltet, daß die Empfangseinrichtung (EMP) geeignet ist, die aktuelle Bildinformation von mindestens einer Einrichtung (S-BOX) nach Anspruch 1 zu empfangen, daß im Speicher (RAM) die Rufnummer der mindestens einen Einrichtung (S-BOX) und mindestens eine weitere Rufnummer abgespeichert sind, wobei jeder Einrichtung (S-BOX) mindestens eine weitere Rufnummer zugeordnet ist, daß die Steuereinheit (DSP) geeignet ist, die Rufnummer der mit der Empfangseinrichtung verbundenen Einrichtung (S-BOX) nach Anspruch 1 zu detektieren und die der Rufnummer der mit der Empfangseinrichtung verbundenen Einrichtung (S-BOX) nach Anspruch 1 zugeordnete weitere Rufnummer zu ermitteln sowie die aktuelle, empfangene Bildinformation zusammen mit der ermittelten Rufnummer zur Sendeeinrichtung (SEN) weiterzuleiten, und daß die Sendeinrichtung (SEN) geeignet ist, eine Wählverbindung zu der ermittelten Rufnummer aufzubauen und die aktuelle Bildinformation über die Wählverbindung weiterzuleiten.

14. Einrichtung (SERVER) nach Anspruch 13, dadurch gekennzeichnet, daß die Steuereinheit (DSP) geeignet ist, einen der aktuellen, empfangenen Bildinformation zugeordneten Text oder ein zugeordnetes Tonsignal zu ermitteln, und daß die Sendeinrichtung (SEN) geeignet ist, anstelle der aktuelle Bildinformation den ermittelten Text bzw. das ermittelte Tonsignal über die Wählverbindung weiterzuleiten.

15. Einrichtung (S-BOX) einer ersten Endstelle (END1) eines Telekommunikationsnetzes (ISDN), beinhaltend einen Zwischenspeicher (MEMO) zum Zwischenspeichern von Bildinformationen, eine Auswerteeinrichtung (AUS), die geeignet ist, sequentiell Bildinformationen zu empfangen, im Zwischenspeicher (MEMO) zwischenzuspeichern und Abweichungen und Übereinstimmungen zwischen zwei Bildinformationen festzustellen, und eine automatische Wähleinrichtung (AUTO) zum automatischen Aufbau einer Wählverbindung zu einer zweiten, von der ersten Endstelle (END1) räumlich getrennten und mit dem Telekommunikationsnetz (ISDN) verbundenen Endstelle (SERVER), die eine vorgegebene Rufnummer aufweist, und zur Übertragung einer aktuellen Bildinformation zusammen mit einer Alarmmeldung für den Fall, daß die Auswerteeinrichtung (AUS) eine Abweichung zwischen der aktuellen und einer weiteren Bildinformation feststellt, dadurch gekennzeichnet, daß die automatische Wähleinrichtung (AUTO) geeignet ist, zu bestimmten Zeitpunkten die aktuelle Bildinformation über die Wählverbindung zu einer dritten Endstelle (END2) für den Fall zu übertragen, daß die Auswerteeinrichtung (AUS) eine Übereinstimmung zwischen der aktuellen und einer weiteren Bildinformation feststellt.

16. Einrichtung (S-BOX) nach Anspruch 15, dadurch gekennzeichnet, daß die Einrichtung (S-BOX) eine programmierbare Steuereinheit beinhaltet, die geeignet ist, die Rufnummer der dritten Endstelle (END2) frei zu programmieren.

17. Einrichtung (S-BOX) nach Anspruch 15, dadurch gekennzeichnet, daß die Einrichtung (S-BOX) eine programmierbare Steuereinheit beinhaltet, die geeignet ist, die Zeitpunkte zu programmieren, zu denen die aktuelle Bildinformation über die Wählverbindung zur dritten Endstelle (END2) übertragen werden soll, für den Fall, daß die Auswerteeinrichtung (AUS) eine Übereinstimmung zwischen der aktuellen und einer weiteren Bildinformation feststellt.

18. Einrichtung (S-BOX) nach Anspruch 15, dadurch gekennzeichnet, daß die Auswerteeinrichtung (AUS) geeignet ist, die aktuelle Bildinformation mit einer Referenzbildinformation zu vergleichen, um Abweichungen und Übereinstimmungen zwischen diesen zwei Bildinformationen festzustellen, und daß die Referenzbildinformation für alle Vergleiche diesselbe ist.

19. Einrichtung (S-BOX) nach Anspruch 15, dadurch gekennzeichnet, daß die automatische Wähleinrichtung (AUTO) geeignet ist, zu bestimmten Zeitpunkten anstelle der aktuellen Bildinformation einen bestimmten Text oder ein bestimmtes Tonsignal über die Wählverbindung zur dritten Endstelle (END2) für den Fall zu übertragen, daß die Auswerteeinrichtung (AUS) eine Übereinstimmung zwischen der aktuellen und einer weiteren Bildinformation feststellt.

20. Einrichtung (S-BOX, SERVER) nach Anspruch 1, 13 oder 15, dadurch gekennzeichnet, daß das Telekommunikationsnetz (ISDN) ein diensteintegrierendes digitales Netz ist.

21. Verfahren zur Weiterleitung einer Bildinformation gekennzeichnet durch folgende Schritte:
1. Empfang der Bildinformation über eine Wählverbindung eines Telekommunikationsnetzes (ISDN),
2. Detektion der Rufnummer der die Bildinformation ausgesandten Endstelle,
3. Ermittlung einer der detektierten Rufnummer zugeordneten Rufnummer,
4. Aufbau einer Wählverbindung zu der ermittelten Rufnummer,
5. Weiterleiten der Bildinformation über die Wählverbindung.

22. Verfahren gekennzeichnet durch durch folgende Schritte:
1. Empfang einer Bildinformation über eine Wählverbindung eines Telekommunikationsnetzes (ISDN),
2. Detektion der Rufnummer der die Bildinformation ausgesandten Endstelle (END1),
3. Ermittlung einer der detektierten Rufnummer zugeordneten Rufnummer und eines der Bildinformation zugeordneten Textes oder eines Tonsignals,
4. Aufbau einer Wählverbindung zu der ermittelten Rufnummer,
5. Weiterleiten des ermittelten Textes oder des Tonsignals über die Wählverbindung.
